# EUROPEAN PATENT SPECIFICATION

(11) **EP 2 224 640 B1**
(45) Date of publication and mention of the grant of the patent: **11.02.2015**
(21) Application number: 08871037.1
(22) Date of filing: 26.12.2008
(51) Int. Cl.: H04L 12/46, H04L 12/66, H04W 28/26, H04W 36/00, H04W 76/02

(54) **A HANDOVER METHOD, APPARATUS AND SYSTEM BETWEEN APS**
EIN ÜBERGABEVERFAHREN, VORRICHTUNG UND SYSTEM ZWISCHEN APS
PROCÉDÉ, APPAREIL ET SYSTÈME DE TRANSFERT ENTRE APS

(30) Priority: 29.12.2007 CN 200710306083; 12.12.2008 CN 200810185545
(43) Date of publication of application: 01.09.2010
(60) Divisional application: 13177012.5
(73) Proprietor: Huawei Technologies Co., Ltd., Longgang District, Shenzhen Guangdong 518129 (CN)
(72) Inventor: WU, Jian, Shenzhen Guangdong 518129 (CN)
(74) Representative: Thun, Clemens
(86) International application number: PCT/CN2008/073796
(87) International publication number: WO 2009/089749

(56) References cited:
- CN-A- 1 438 789
- CN-A- 1 647 560
- CN-A- 1 913 466
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)" 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.2.0, 5 October 2007 (2007-10-05), pages 1-109, XP050377577
- "3rd Generation Partnership Project; Technical Specification Group Services and System Aspects; General Packet Radio Service (GPRS) enhancements for Evolved Universal Terrestrial Radio Access Network (E-UTRAN) access (Release 8)" 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 13 December 2007 (2007-12-13), pages 1-167, XP050363622
- "3rd Generation Partnership Project; Technical Specification Group Radio Access Network; Evolved Universal Terrestrial Access Network (E-UTRAN); S1 Application Protocol (S1AP) (Release 8)" 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 13 December 2007 (2007-12-13), pages 1-125, XP050377689
- "3rd Generation Partnership Project; Technical Specification Group Radio Access Network; Evolved Universal Terrestrial Radio Access Network (EUTRAN); X2 application protocol (X2AP) (Release 8)" 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 13 December 2007 (2007-12-13), pages 1-60, XP050377730
- "3rd Generation Partnership Project;Technical Specification Group Radio Access Network;Home (e)NodeB;Network aspects(Release 7)" 3GPP DRAFT; R3-072198 HOME NB TR_V030_WC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, 31 October 2007 (2007-10-31) , XP050423668 [retrieved on 2008-01-29]

## Description

### Field of the Invention

The present invention relates to a mobile communications technology, and in particular, to a method, apparatus, and system for performing handover between access points (APs).

### Background of the Invention

The universal mobile telecommunications system (UMTS) is a third generation (3G) mobile phone technology. The UMTS uses wireless code division multiple access (WCDMA) as the lower layer standard, and is prototyped by the Third Generation Partnership Project (3GPP). The UMTS represents a response from Europe to the requirements of the ITU IMT-2000 for 3G cellular radio systems.

The UMTS AP is an emerging UMTS base station, which is applicable to small area such as home and office location and is intended to solve the coverage and capacity problems. The UMTS AP may be connected to an operator's network through broadband access and provide various 3G services.

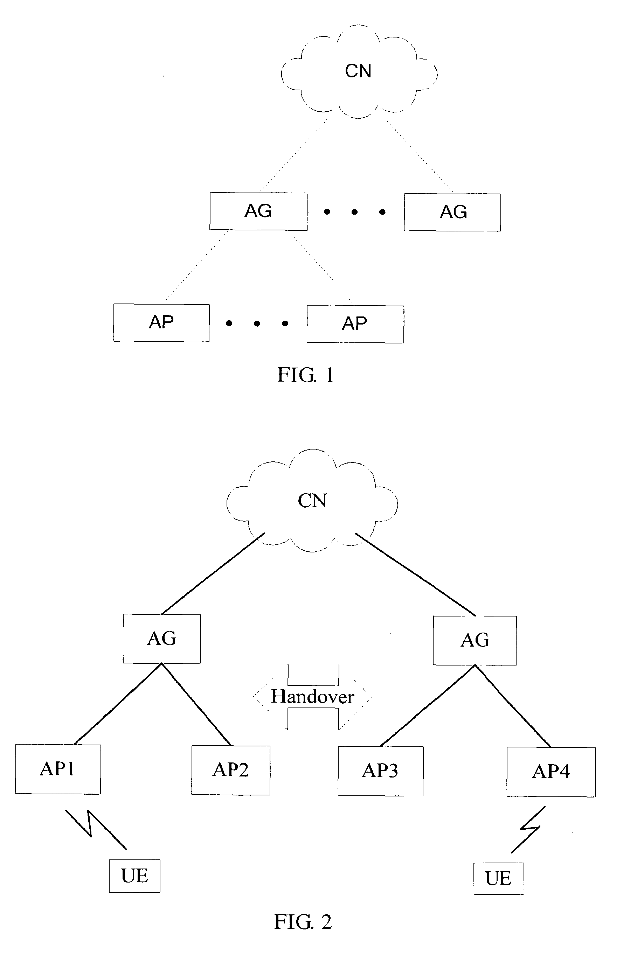

FIG. 1 shows a mainstream architecture of an AP network in the prior art. As shown in FIG. 1, multiple APs are connected to the operator's core network through an access gateway (AG). Multiple AG devices may be available on an operator's network.

The AP generally implements the functions of the NodeB and radio network controller (RNC) on a WCDMA network, and the function of the RNC implemented by the AP is specified by the 3GPP protocol. There are a huge number of APs on the AP network. If each AP is allocated with a radio network controller identity (RNC-ID), the number of RNC-IDs is insufficient. Thus, multiple APs may share the same RNC-ID on the AP network. The AG implements the agent functions of the RNC, including Iu interface flag conversion, radio access bearer (RAB) connection flag and IP address conversion, and user plane forwarding. The agent functions of the RNC that the AG implements are not specified by the 3GPP protocol. At the core network side, the AG is considered as an RNC. Generally, each AG is allocated with an RNC-ID, and all the APs under the same AG share the RNC-ID of the AG. Multiple APs may constitute a network to cover a large area. When a user equipment (UE) moves in the AP network, the UE may be handed over between APs. As shown in FIG. 2, the UE may be handed over between APs within the AG or across the AG.

A standard specification titled 3GPP TS 36.300 V8.2.0 (2007-09) discloses an overview and overall description of the E-UTRAN radio interface protocol architecture. The E-UTRAN consists of eNBs, providing the E-UTRA user plane (PDCP/RLC/MAC/PHY) and control plane (RRC) protocol terminations towards the UE. The eNBs are interconnected with each other by means of the X2 interface. The eNBs are also connected by means of the S1 interface to the EPC (Evolved Packet Core). And more specifically, in Figure 10.1.2.1 a handover for a UE moving from one eNB to target eNB is disclosed.

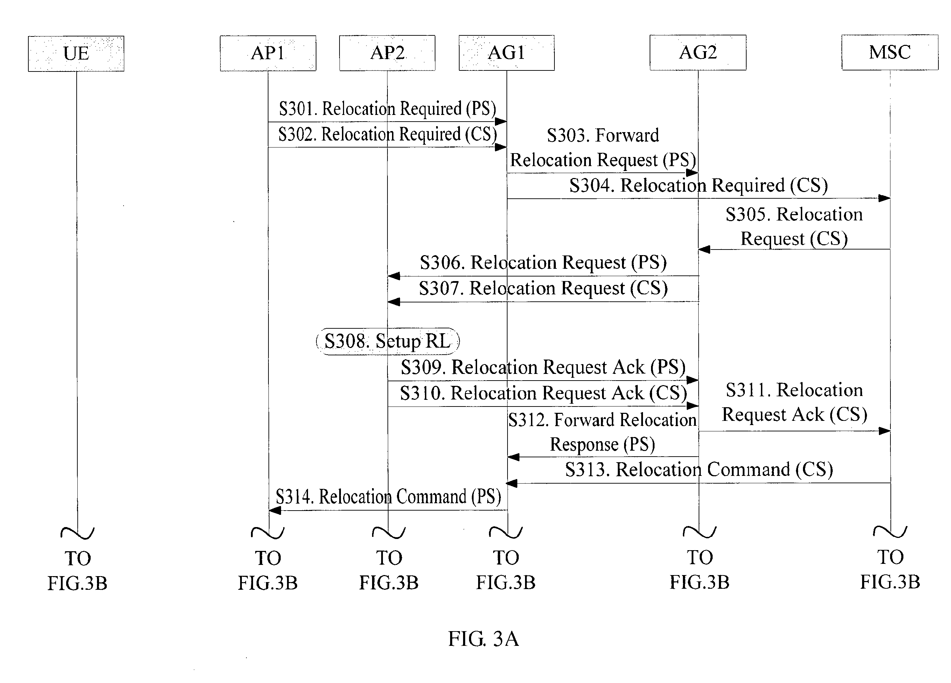

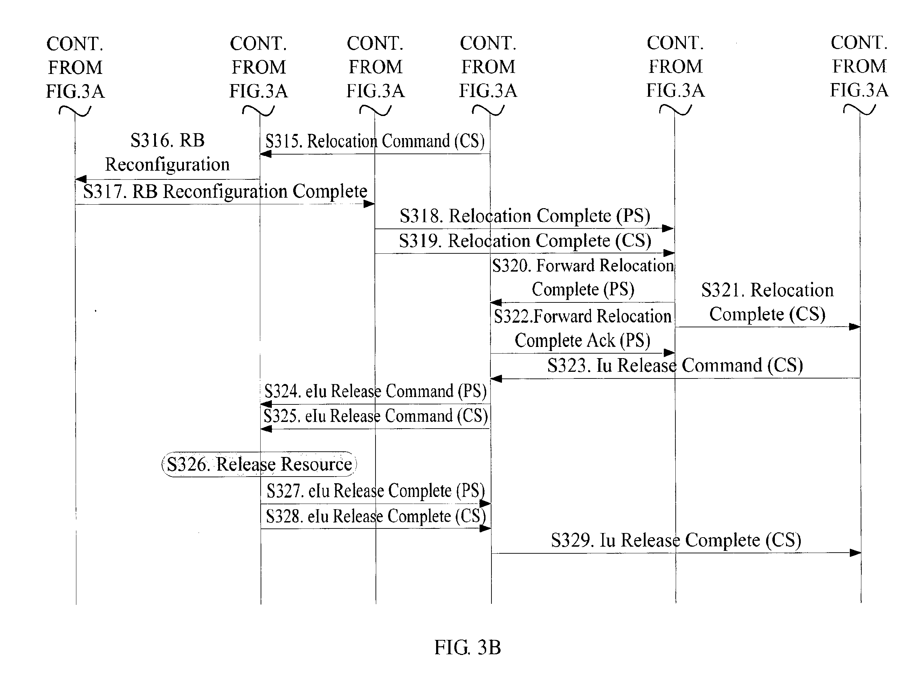

The inventor discovers the following problems in the prior art: Multiple handover solutions are defined on the WCDMA network in the prior art, such as soft handover, hard handover, and hard handover with migration; these handover solutions are applicable to the macro network architecture; the hard handover with migration is the main process applicable to the AP network, as shown in FIG. 3. The hard handover with migration is one of the main methods applicable to the handover on the AP network in the prior art. However, this method is only applicable to a scenario where different AGs are available and the APs use different RNC-IDs. When the handover is implemented between APs that use the same RNC-ID, the handover process defined in the protocol cannot be used, thus causing handover failure.

### Summary of the Invention

Embodiments of the present invention provide a method and an apparatus for performing handover between APs, so that the handover may be implemented between a source AP and a target AP when the source AP and the target AP use the same RNC-ID and the handover is invisible to the core network.

To achieve the above objective, a method for performing handover for a UE, between a source access point, AP, and a target AP in an AP network,
said AP network comprising access points including said source AP and target AP and an access gateway, AG, connecting the APs to a core network and implementing agent functions of a radio network controller, RNC, wherein a RNC identity, RNC-ID is allocated to the AG and all APs connected through the AG to the core network use the RNC-ID of the AG,
wherein the handover is invisible to the core network and the method includes:
receiving, by the AG, a handover request from the source AP, and sending the handover request to the target AP, wherein the handover request comprises a PS context or a CS context of the UE;
sending, by the AG, a handover command to the source AP, after the target AP sends a handover request ACK to the AG; and
adjusting, by the AG, uplink and downlink tunnels with the source AP to uplink and downlink tunnels with the target AP after the UE performs reconfiguration and synchronizes with the target AP and the target AP sends a handover detect command to the AG.

An AG configured to perform handover between a source AP and a target AP in an AP network said AP network comprising access points including said source AP and target AP and the access gateway, AG, connecting the APs to a core network and implementing agent functions of a radio network controller, RNC, wherein a RNC identity, RNC-ID is allocated to the AG and all APs connected through the AG to the core network use the RNC-ID of the AG, the AG includes a signal processing module, a handover instructing module, and a tunnel adjusting module.

The signal processing module is configured to: receive from the source AP a handover request that includes a PS context and a CS context of a UE sent from a source AP, and send the handover request to a target AP after processing the handover request.

The handover instructing module is configured to: send a handover command to the source AP, after the target AP sends a handover request ACK to the AG.

The tunnel adjusting module is configured to adjust uplink and downlink tunnels with the source AP to uplink and downlink tunnels with the target AP after the UE performs reconfiguration and synchronizes with the target AP and the target AP sends a handover detect command to the AG.

The technical solution of the present invention has the following merits: The handover, being invisible to the core network, between the source AP and the target AP is implemented, which overcomes the problem in the prior art that the handover between two APs using the same RNC-ID cannot be implemented; and in addition, the burden of the core network is lightened.

### Brief Description of the Drawings

To make the technical solution under the present invention clearer, the accompanying drawings for illustrating the embodiments of the present invention or the prior art are outlined below. Apparently, the accompanying drawings are for the exemplary purpose only, and those skilled in the art can derive other drawings from such accompanying drawings without any creative work.
FIG. 1 shows a mainstream architecture of an AP network in the prior art;
FIG. 2 is a schematic diagram illustrating the handover of a UE between APs in the prior art;
FIG. 3 shows a process of hard handover with migration in the prior art;
FIG. 4 shows a process of handover between an AP1 and an AP2 that use the same RNC-ID in a first embodiment of the present invention;
FIG. 5 shows a process of handover between an AP1 and an AP2 that use the same RNC-ID in a second embodiment of the present invention;
FIG. 6 shows a process of handover between an AP1 and an AP2 that use the same RNC-ID in a third embodiment of the present invention;
FIG. 7 shows a structure of an AP in a fourth embodiment of the present invention; and
FIG. 8 shows a structure of an AG in a fifth embodiment of the present invention.

### Detailed Description of the Embodiments

For better understanding of the objective, technical solution and merits of the present invention, the present invention is hereinafter described in detail with reference to the accompanying drawings. The following describes the technical solution provided in embodiments of the present invention by taking the UMTS as an example. However, this does not limit the applications of the technical solution of the present invention in other systems.

In embodiments of the present invention, AP1 represents the source AP, and AP2 represent the target AP; the UE is handed over between AP1 and AP2. It is understandable that the present invention is not limited by a specific AP ID.

In the technical solution provided in embodiments of the present invention, the UE is handed over from AP1 to AP2 when AP1 and AP2 use the same RNC-ID; through the handover, the UE context on AP1 are moved to AP2, and the tunnel path is adjusted on the AG. This process is invisible to the core network. Because the handover is implemented without the core network, the burden of the core network is lightened and the handover is compatible with current core network. In addition, this technical solution is applicable to all AP networks with a similar architecture, such as the UMTS or global system for mobile communications (GSM).

Before initiating the handover, AP1 may judge whether the handover is implemented between APs that use the same RNC-ID or between APs that use different RNC-IDs. AP1 is configured with an AP neighbor cell list and a macro network neighbor cell list, where the neighbor cell list includes an RNC-ID and a Cell ID. Thus, when AP1 initiates the handover, AP1 may check whether AP2 is the AP neighbor cell and has the same RNC-ID; if AP2 is the AP neighbor cell, AP1 determines to perform handover between APs; if AP2 and AP1 have the same RNC-ID, AP1 initiates handover between APs that use the same RNC-ID.

The following describes the technical solution of the present invention in detail with reference to exemplary embodiments.

### First Embodiment

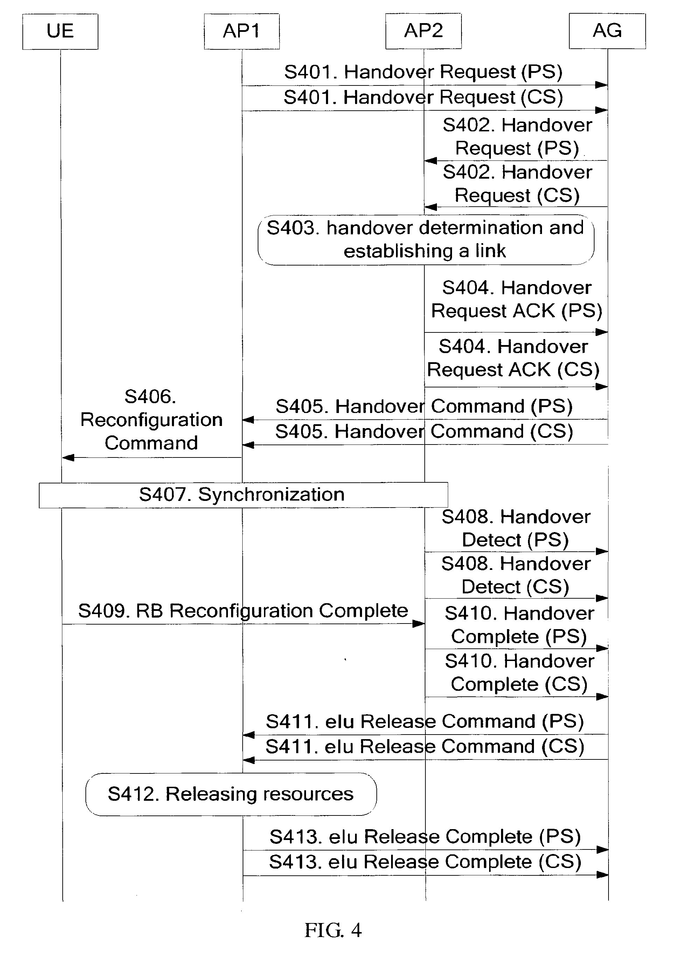

FIG. 4 shows a signaling process in which the UE is handed over between AP1 and AP2 that use the same RNC-ID in the first embodiment of the present invention. When the UE needs to be handed over from AP1 to AP2, the UE sends the UE parameters (including PS context or CS context) on AP1 to AP2 through the handover process in the first embodiment. Then, the AG adjusts related tunnel path. Because this entire handover process is invisible to the core network, this process overcomes the problem in the prior art where the mobile switching center (MSC) of the core network does not support the handover between APs that use the same RNC-ID. The process includes the following steps:
Step S401: AP1 sends a Handover Required message to the AG.

The Handover Required message carries the PS context or CS context of the UE. Through the message, AP1 sends the PS context or CS context of the UE to the AG.

In addition, after AP1 sends the Handover Required message, AP1 may start a timeout protection timer to wait for a handover command. If AP1 does not receive any handover command when the timer times out, AP1 initiates a handover cancellation process.

Step S402: The AG returns a Handover Required message to AP2.

The Handover Required message carries the PS context or CS context of the UE. Through the message, the AG sends the PS context or CS context of the UE to AP2.

In this step, if the AG cannot find the address of AP2, the AG returns a Handover Preparation Failure message to AP1. Then, the process ends.

Step S403: After receiving the PS context or CS context of the UE, AP2 makes a handover determination. If determining that related resources meet the handover conditions, AP2 reserves resources, establishes a transmission link and a radio link, and waits for the access of the UE.

Related resources include radio and transmission resources and resources of AP2, such as processing capabilities, memory, and specifications of AP2.

AP2 determines, according to the received PS context or CS context of the UE, radio and transmission resources and resources of AP2, that the handover conditions are met if the radio and transmission resources and resources of AP2 can meet the requirements of the PS context or CS context of the UE. Then, AP2 sets a radio link and a transmission tunnel according to the PS context or CS context of the UE.

In this step, if the radio transmission resources or the resources of AP2 are insufficient, for example, the air interface code resources are insufficient and AP user specifications are restricted, or if any capabilities are not supported, for example, specified integrity protection/encryption algorithm, AP2 returns a Handover Failure message that carries corresponding failure causes to the AG. The AG returns a Handover Preparation Failure message that carries corresponding failure causes to AP1. Then, the process ends.

Step S404: AP2 sends a Handover Request ACK to the AG.

If the lossless handover is supported, AP2 may send the back transmission tunnel (used to forward downlink data buffered on AP1 to AP2) parameters of the UE to the AG through the Handover Request ACK.

Step S405: The AG sends a Handover Command to AP1.

If the lossless handover is supported, the AG may send the back transmission tunnel parameters of the UE to AP1 through the Handover Command.

Step S406: After receiving the Handover Command from the AG, AP1 sends an RB Reconfiguration message to the UE.

Step S407: After receiving the RB Reconfiguration message, the UE initiates a synchronization process and begins to synchronize with AP2.

Step S408: AP2 sends a Handover Detect command to the AG.

The AG may adjust the tunnel path after receiving the Handover Detect command. The adjustment process includes adjusting the uplink and downlink tunnels between the AG and AP1 to the uplink and downlink tunnels between the AG and AP2.

Step S409: The UE sends an RB Reconfiguration Complete message to AP2.

At this time, the UE completes the synchronization with AP2, and sends an RB Reconfiguration Complete message to AP2.

Step S410: After receiving the RB Reconfiguration Complete message, AP2 sends a Handover Complete message to the AG.

If the AG does not adjust the tunnel path in step S408, the AG may also adjust the tunnel path after receiving the Handover Complete message. The adjustment process includes adjusting the uplink and downlink tunnels between the AG and AP1 to the uplink and downlink tunnels between the AG and AP2.

Step S411: The AG sends an eIu Release Command to AP1.

Step S412: After receiving the eIu Release Command, AP1 executes the process of releasing the resources of AP1.

Step S413: After releasing the resources of AP1, AP1 notifies the AG of the completion of resource release through an eIu Release Complete message.

When AP1 initiates the handover preparation but does not send the RB Reconfiguration message to the UE or AP1 sends the RB Reconfiguration message to the UE but the UE returns it to AP1, AP1 may send a Handover Cancel message to the AG to cancel the handover. After receiving the Handover Cancel message, the AG returns a Handover Cancel Acknowledge message to AP1, and releases the connection with the eIu interface of AP2 and related resources.

If AP1 receives a Handover Failure message (mentioned in step S403) before receiving the Handover Cancel Acknowledge message, the handover cancellation process ends.

In addition, when AP1 finds that the handover fails in one of the CS domain and the PS domain but succeeds or is being performed in the other domain, AP1 may initiate a handover cancellation process in the other domain.

In this embodiment, the PS context or CS context of the UE do not pass through the MSC of the core network, and thus invisible to the core network. In this way, the handover between APs that use the same RNC-ID can be implemented.

### Second Embodiment

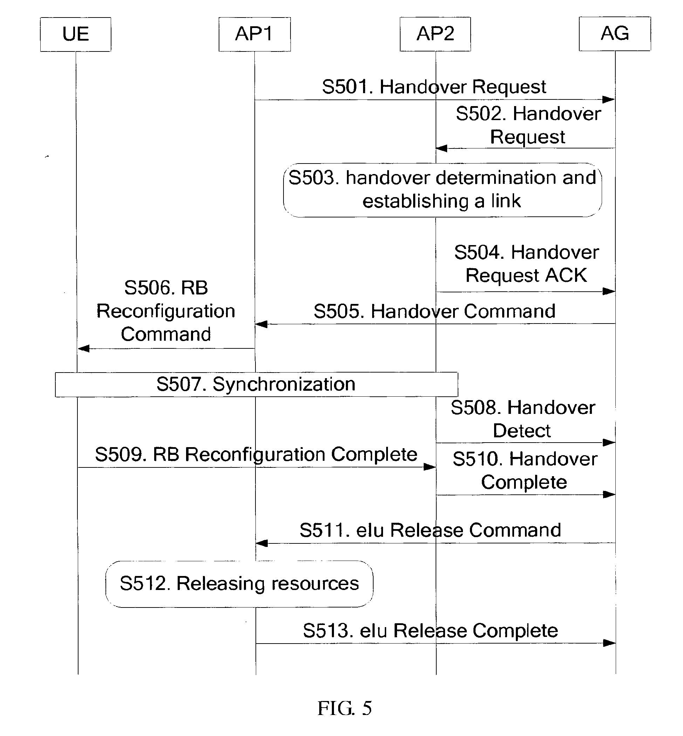

FIG. 5 shows a process of handover between AP1 and AP2 by encapsulating the PS context and CS context into a signaling message in the second embodiment of the present invention. In the second embodiment of the present invention, the handover between AP1 and AP2 is implemented by combining the PS context and CS context of the user into a UE parameter, which lightens the burden of the AG and makes the handover process more efficient and stable. The steps of this process are similar to those described in the first embodiment, and are not further described.

In the second embodiment, the PS context and CS context of the UE are combined into a signaling message. The signaling message is transmitted in the same way as that described in the first embodiment. In the handover process in the second embodiment, the PS context and CS context on AP1 are sent to AP2; related parameters and tunnel directions are adjusted on the AG. This process is invisible to the core network, and the handover may also be implemented between AP1 and AP2 that use the same RNC-ID. The advantage of the second embodiment lies in the combination of the PS context and CS context into a signaling message for transmission, which may lighten the burden of the AG and improve the information transmission efficiency.

### Third Embodiment

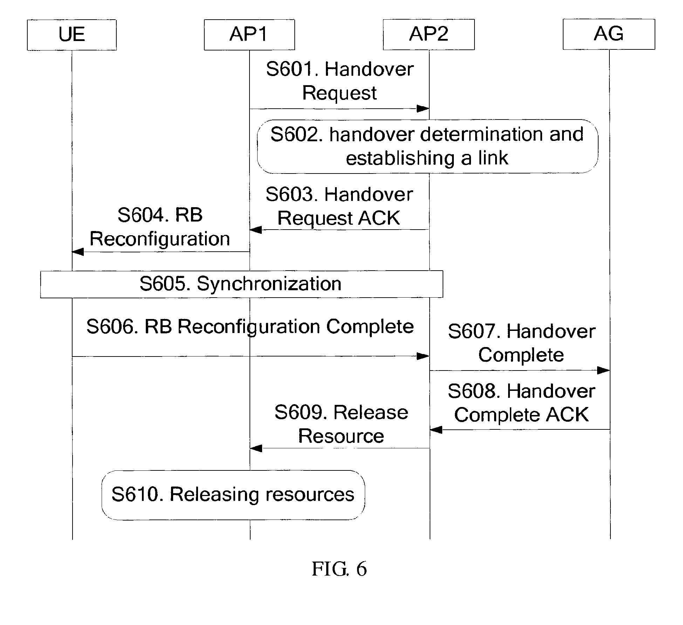

FIG. 6 shows a process in which the UE is handed over between AP1 and AP2 in the case of interworking between AP1 and AP2 in the third embodiment of the present invention. In this embodiment, due to the interworking between AP1 and AP2, AP1 may directly send the UE parameters (including PS context and CS context) to AP2. Compared with the preceding embodiments, this embodiment enables the AG to receive fewer signaling messages, thus lightening the burden of the AG, facilitating the handover process, and improving the efficiency.

AP1 may interwork with AP2 through the IP network between APs or through the Iur interface between APs.

The process includes the following steps:
Step S601: AP1 directly sends a Handover Request to AP2.
Step S602: AP2 makes a handover determination. The specific determination method is the same as that in the first embodiment, and is not further described.
Step S603: When determining that the handover can be performed, AP2 sends a Handover Request ACK to AP1.
Step S604: After receiving the Handover Request ACK, AP1 sends an RB Reconfiguration command to the UE.
Step S605: The UE initiates the synchronization process, and begins to synchronize with AP2.
Step S606: After finishing the reconfiguration, the UE sends an RB Reconfiguration Complete message to AP2.
Step S607: AP2 sends a Handover Complete message to the AG, notifying the AG of the information that the UE completes the handover and reconfiguration.
After the UE completes the handover and reconfiguration, the AG adjusts the tunnel path. The adjustment process includes adjusting the uplink and downlink tunnels between the AG and AP1 to the uplink and downlink tunnels between the AG and AP2.
Step S608: After knowing that the UE completes the handover, the AG sends a Handover Complete ACK to AP2.
Step S609: After receiving the Handover Complete ACK, AP2 sends a Release Resource command to AP1.
Step S610: AP1 executes the resource release process.

Detailed above are specific steps in the third embodiment supposing the PS context and CS context are combined for transmission. It is understandable to those skilled in the art that the solution in the third embodiment may also be available when the PS and CS packets are transmitted respectively.

In the third embodiment, being invisible to the core network, the handover is implemented between AP1 and AP2, which overcomes the problem in the prior art that the handover between two APs that use the same RNC-ID cannot be implemented. The interworking between APs reduces the number of signaling messages sent to the AG and lightens the burden of the core network.

It is understandable to those skilled in the art that all or part of the steps in the methods provided in the preceding embodiments may be performed by hardware instructed by a program. The program may be stored in a computer readable storage medium, such as a read-only memory/random access memory (ROM/RAM), a magnetic disk, and a compact disk.

### Fourth Embodiment

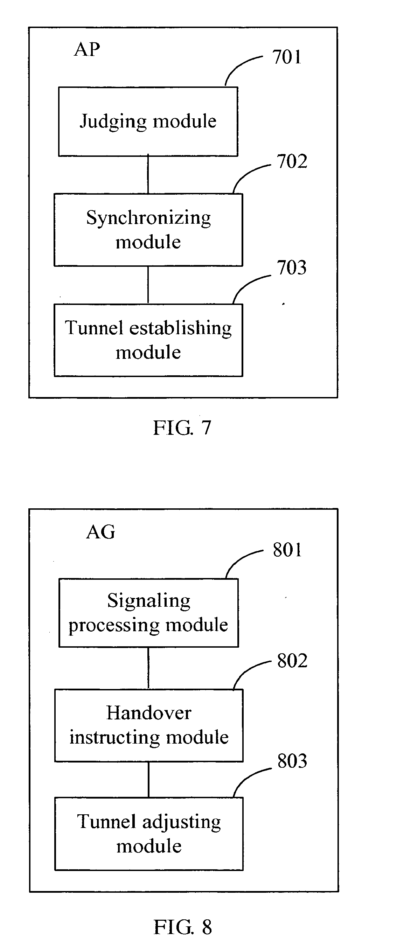

In addition, an AP is provided in an embodiment of the present invention, as shown in FIG. 7. The AP is configured to perform handover between APs that use the same RNC-ID, and includes a judging module 701, a synchronizing module 702, and a tunnel establishing module 703.

The judging module 701 is configured to: receive a handover request, determine, according to related resources and UE context in the handover request, whether handover conditions are met, and, if handover conditions are met, reserve resources and establish a transmission link and a radio link, and send a handover command to related NEs.

The handover request received by the judging module 701 is generally sent by the source AP and processed and forwarded by the AG when the APs cannot interwork. When the APs can interwork, the source AP sends the handover request to the target AP directly. The preceding step of sending a handover command to related NEs generally includes: When the APs cannot interwork, the judging module sends a Handover Request ACK to the AG; after receiving the Handover Request ACK, the AG knows that the handover can be performed and sends a Handover Command to the source AP; when the APs can interwork, the judging module may directly send a Handover Request ACK to the source AP, for ascertaining that the handover can be performed.

The synchronizing module 702 is configured to: synchronize with the UE after the UE receives a reconfiguration command from the source AP and begins to perform reconfiguration if the judging module 701 determines that the handover conditions are met.

The tunnel establishing module 703 is configured to establish uplink and downlink tunnels with the AG according to the instruction from the AG after the synchronizing module 702 finishes the synchronization.

The AP may further include other modules to implement corresponding steps in the method provided in embodiments of the present invention.

### Fifth Embodiment

An AG is provided in an embodiment of the present invention, as shown in FIG. 8. The AG is configured to perform handover between APs that use the same RNC-ID, and includes a signal processing module 801, a handover instructing module 802, and a tunnel adjusting module 803.

The signal processing module 801 is configured to: receive a handover request that includes UE a context sent from the source AP, and send the handover request to the target AP after processing the handover request.

The handover instructing module 802 is configured to: send a handover command to the source AP after the target AP determines, according to the UE context and related resources, that handover conditions are met, reserves resources and establishes a transmission link and a radio link.

The tunnel adjusting module 803 is configured to adjust the uplink and downlink tunnels with the source AP to the uplink and downlink tunnels with the target AP, after the UE performs reconfiguration and synchronizes with the target AP.

The AG may further include other modules to implement corresponding steps in the method provided in embodiments of the present invention.

In addition, a system for performing handover between APs is provided in an embodiment of the present invention. The system includes a UE, the AP and the AG in the preceding embodiments. The AP and the AG are described in detail in the preceding description, and are not further described.

It is understandable to those skilled in the art that the present invention is not only applicable to the UMTS AP but also to similar AP networks such as the GSM AP network. The GSM handover process is basically the same as the UMTS handover process, and their difference mainly lies in the air interface signaling name and specific parameters. The following table lists the mapping between the air interface signaling messages:

| **No.** | **UMTS** | **GSM** |
|---|---|---|
| 1 | RB Reconfiguration | Handover Command |
| 2 | RB Reconfiguration Complete | Handover Complete |

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a compact disk read-only memory (CD-ROM), USB disk, or a removable hard disk. The software product includes a number of instructions that enable a computer device (personal computer, server, or network device) to execute the methods provided in the embodiments of the present invention.

The above descriptions are merely exemplary embodiments of the present invention, but not intended to limit the scope of the present invention.

## Claims

1. A method for performing handover for a user equipment, UE, between a source access point, AP, and a target AP in an AP network,
said AP network comprising access points including said source AP and target AP and an access gateway, AG, connecting the APs to a core network and implementing agent functions of a radio network controller, RNC, wherein a RNC identity, RNC-ID is allocated to the AG and all APs connected through the AG to the core network use the RNC-ID of the AG,
wherein the handover is invisible to the core network,
**characterized in that** the method comprises:
receiving (S401, S501), by the AG, a handover request from the source AP, and sending (S402, S502) the handover request to the target AP, wherein the handover request comprises a PS context or a CS context of the UE;
sending (S405, S505), by the AG, a handover command to the source AP, after the target AP sends a handover request ACK to the AG; and
adjusting, by the AG, uplink and downlink tunnels with the source AP to uplink and downlink tunnels with the target AP after the UE performs reconfiguration and synchronizes (S407, S507) with the target AP and the target AP sends (S408,S508) a handover detect command to the AG.

2. The method of claim 1, further comprising:
sending (S411, S511), by the AG, an eIu release command to the source AP, after the AG receives (S410, S510) a handover complete message from the target AP.

3. The method of claim 1 or claim 2, wherein the context of the UE comprises: a packet switch context of the UE, or a circuit switch context of the UE, or a circuit switch of the UE combined with a packet switch context of the UE.

4. The method of claims 1 or claim 2, wherein the source AP and the target AP belong to a universal mobile telecommunications system, UMTS.

5. An access gateway, AG, configured to perform handover between a source access point, AP, and a target AP in an AP network,
said AP network comprising access points including said source AP and target AP and the access gateway, AG, connecting the APs to a core network and implementing agent functions of a radio network controller, RNC, wherein a RNC identity, RNC-ID is allocated to the AG and all APs connected through the AG to the core network use the RNC-ID of the AG,
wherein the handover is invisible to the core network,
**characterized in that** the AG comprises a signal processing module (801), a handover instructing module (802) and a tunnel adjusting module (803), wherein:
the signal processing module (801) is configured to: receive from the source AP a handover request that includes a PS context and a CS context of a user equipment, UE, and send the handover request to the target AP after processing the handover request;
the handover instructing module (802) is configured to: send a handover command to the source AP, after the target AP sends a handover request ACK to the AG; and
the tunnel adjusting module (803) is configured to adjust uplink and downlink tunnels with the source AP to uplink and downlink tunnels with the target AP, after the UE performs reconfiguration and synchronizes with the target AP and the target AP sends a handover detect command to the AG.

6. The AG of claim 5, further comprising:
a unit means for sending an eIu release command to the source AP, after the AG receives a handover complete message from the target AP.

7. The AG of claim 5 or 6, wherein the source AP and the target AP belong to a universal mobile telecommunications system, UMTS.

## Patentansprüche

1. Verfahren zum Durchführen einer Übergabe eines Benutzer-Equipment (User Equipment), UE, zwischen einem Quellzugangspunkt (Access Point), AP, und einem Ziel-AP in einem AP-Netz,
wobei das AP-Netz Zugangspunkte umfasst, die den Quell-AP und den Ziel-AP ebenso einschließen wie einen Zugangsnetzübergang (Access Gateway), AG, der die AP mit einem Kernnetz verbindet und Agentenfunktionen einer Funknetzsteuerung (Radio Network Controller), RNC, implementiert, wobei dem AG eine RNC-Kennung (RNC Identity), RNC-ID, zugewiesen ist und alle über den AG mit dem Kernnetz verbundenen AP die RNC-ID des AG verwenden,
wobei die Übergabe für das Kernnetz nicht erkennbar ist,
**dadurch gekennzeichnet, dass** das Verfahren umfasst:
Empfangen (S401, S501), durch den AG, einer Übergabeanforderung von dem Quell-AP und Senden (S402, S502) der Übergabeanforderung an den Ziel-AP, wobei die Übergabeanforderung einen PS-Kontext oder einen CS-Kontext des UE umfasst;
Senden (S405, S505), durch den AG, eines Übergabebefehls an den Quell-AP, nachdem der Ziel-AP eine Übergabeanforderungsquittung ACK an den AG sendet; und
Einstellen, durch den AG, von Aufwärtsstrecken- und Abwärtsstreckentunneln mit dem Quell-AP auf Aufwärtsstrecken- und Abwärtsstreckentunnel mit dem Ziel-AP, nachdem das UE eine Neukonfiguration ausführt und sich mit dem Ziel-AP synchronisiert (S407, S507) und der Ziel-AP einen Übergabeerkennungsbefehl an den AG sendet (S408, S508).

2. Verfahren nach Anspruch 1, ferner umfassend:
Senden (S411, S511), durch den AG, eines elu-Freigabebefehls an den Quell-AP, nachdem der AG eine Übergabeendemeldung von dem Ziel-AP empfängt (S410, S510).

3. Verfahren nach Anspruch 1 oder Anspruch 2, wobei der Kontext des UE umfasst:
einen Paketvermittlungs (Packet Switch, PS) -Kontext des UE oder einen Leitungsvermittlungs (Circuit Switch, CS) -Kontext des UE oder einen Leitungsvermittlungskontext des UE kombiniert mit einem Paketvermittlungskontext des UE.

4. Verfahren nach Anspruch 1 oder Anspruch 2, wobei der Quell-AP und der Ziel-AP Teil eines universellen mobilen Telekommunikationssystems (Universal Mobile Telecommunications System), UMTS, sind.

5. Zugangsnetzübergang, AG, der dafür ausgelegt ist, eine Übergabe zwischen einem Quellzugangspunkt, AP, und einem Ziel-AP in einem AP-Netz durchzuführen,
wobei das AP-Netz Zugangspunkte umfasst, die den Quell-AP und den Ziel-AP ebenso einschließen wie den Zugangsnetzübergang, AG, der die AP mit einem Kernnetz verbindet und Agentenfunktionen einer Funknetzsteuerung, RNC, implementiert, wobei dem AG eine RNC-Kennung, RNC-ID, zugewiesen ist und alle über den AG mit dem Kernnetz verbundenen AP die RNC-ID des AG verwenden, wobei die Übergabe für das Kernnetz nicht erkennbar ist,
**dadurch gekennzeichnet, dass** der AG ein Signalverarbeitungsmodul (801), ein Übergabeanweisungsmodul (802) und ein Tunneleinstellungsmodul (803) umfasst,
wobei:
das Signalverarbeitungsmodul (801) ausgelegt ist zum: Empfangen, von dem Quell-AP, einer Übergabeanforderung, die einen PS-Kontext und einen CS-Kontext eines Benutzer-Equipment, UE, beinhaltet, und Senden der Übergabeanforderung an den Ziel-AP nach Verarbeiten der Übergabeanforderung;
das Übergabeanweisungsmodul (802) ausgelegt ist zum: Senden eines Übergabebefehls an den Quell-AP, nachdem der Ziel-AP eine Übergabeanforderungsquittung ACK an den AG sendet; und
das Tunneleinstellungsmodul konfiguriert ist zum Einstellen von Aufwärtsstrecken- und Abwärtsstreckentunneln mit dem Quell-AP auf Aufwärtsstrecken- und Abwärtsstreckentunnel mit dem Ziel-AP, nachdem das UE eine Neukonfiguration ausführt und sich mit dem Ziel-AP synchronisiert und der Ziel-AP einen Übergabeerkennungsbefehl an den AG sendet.

6. AG nach Anspruch 5, ferner umfassend:
ein Einheitenmittel zum Senden eines eIu-Freigabebefehls an den Quell-AP, nachdem der AG eine Übergabeendemeldung von dem Ziel-AP empfängt.

7. AG nach Anspruch 5 oder 6, wobei der Quell-AP und der Ziel-AP Teil eines universellen mobilen Telekommunikationssystems, UMTS, sind.

## Revendications

1. Procédé d'exécution d'un transfert d'un équipement utilisateur, UE, entre un point d'accès, AP, source, et un AP cible dans un réseau AP,
ledit réseau AP comprenant des points d'accès comportant ledit AP source et ledit AP cible et une passerelle d'accès, AG, qui relie les AP à un réseau coeur et met en oeuvre des fonctions d'agent d'un contrôleur de réseau radio, RNC, dans lequel une identité RNC, RNC-ID, est attribuée à l'AG et tous les AP reliés par le biais de l'AG au réseau coeur utilisent la RNC-ID de l'AG,
dans lequel le transfert est invisible pour le réseau coeur,
**caractérisé en ce que** le procédé comprend :
la réception (S401, S501), par l'AG, d'une requête de transfert depuis l'AP source, et l'envoi (S402, S502) de la requête de transfert à l'AP cible, la requête de transfert comprenant un contexte PS ou un contexte CS de l'UE ;
l'envoi (S405, S505), par l'AG, d'une commande de transfert à l'AP source, après que l'AP cible envoie un ACK de requête de transfert à l'AG ; et
le réglage, par l'AG, de tunnels de liaison montante et de liaison descendante avec l'AP source sur des tunnels de liaison montante et de liaison descendante avec l'AP cible après que l'UE effectue une reconfiguration et se synchronise (S407, S507) avec l'AP cible et l'AP cible envoie (S408, S508) une commande de détection de transfert à l'AG.

2. Procédé selon la revendication 1, comprenant en outre :
l'envoi (S411, S511), par l'AG, d'une commande de libération eIu à l'AP source, après que l'AG reçoit (S410, S510) un message de transfert terminé depuis l'AP cible.

3. Procédé selon la revendication 1 ou la revendication 2, dans lequel le contexte de l'UE comprend : un contexte de commutation par paquets de l'UE, ou un contexte de commutation par circuits de l'UE, ou une commutation par circuit de l'UE combinée à un contexte de commutation par paquets de l'UE.

4. Procédé selon la revendication 1 ou la revendication 2, dans lequel l'AP source et l'AP cible appartiennent à un système de télécommunications mobile universel, UMTS.

5. Passerelle d'accès, AG, configurée pour exécuter un transfert entre un point d'accès, AP, source, et un AP cible dans un réseau AP,
ledit réseau AP comprenant des points d'accès comportant ledit AP source et ledit AP cible et la passerelle d'accès, AG, reliant les AP à un réseau coeur et mettant en oeuvre des fonctions d'agent d'un contrôleur de réseau radio, RNC, dans lequel une identité RNC, RNC-ID, est attribuée à l'AG et tous les AP reliés par le biais de l'AG au réseau coeur utilisent la RNC-ID de l'AG,
dans lequel le transfert est invisible pour le réseau coeur,
**caractérisée en ce que** l'AG comprend un module de traitement de signal (801), un module d'instruction de transfert (802) et un module de réglage de tunnels (803),
dans laquelle :
le module de traitement de signal (801) est configuré pour : recevoir depuis l'AP source une requête de transfert qui comprend un contexte PS ou un contexte CS d'un équipement utilisateur, UE, et envoyer la requête de transfert à l'AP cible après le traitement de la requête de transfert ;
le module d'instruction de transfert (802) est configuré pour : envoyer une commande de transfert à l'AP source, après que l'AP cible envoie un ACK de requête de transfert à l'AG ; et
le module de réglage de tunnels (803) est configuré pour régler des tunnels de liaison montante et de liaison descendante avec l'AP source sur des tunnels de liaison montante et de liaison descendante avec l'AP cible après que l'UE effectue une reconfiguration et se synchronise avec l'AP cible et l'AP cible envoie une commande de détection de transfert à l'AG.

6. AG selon la revendication 5, comprenant en outre :
un moyen d'unité pour envoyer une commande de libération eIu à l'AP source, après que l'AG reçoit un message de transfert terminé depuis l'AP cible.

7. AG selon la revendication 5 ou 6, dans lequel l'AP source et l'AP cible appartiennent à un système de télécommunications mobile universel, UMTS.
